# EUROPÄISCHE PATENTSCHRIFT

(11) **EP 0 736 703 B1**
(45) Veröffentlichungstag und Bekanntmachung des Hinweises auf die Patenterteilung: **13.10.1999**
(21) Anmeldenummer: 96101318.2
(22) Anmeldetag: 31.01.1996
(51) Int. Cl.: F16H 57/04, F16N 39/00

(54) **Vorrichtung zur Beeinflussung der Getriebeöltemperatur in Kraftfahrzeugen**
Device for influencing the oil temperature in vehicle transmissions
Dispositif pour influer la température d'huile dans des transmissions véhiculaires

(30) Priorität: 05.04.1995 DE 19512783
(43) Veröffentlichungstag der Anmeldung: 09.10.1996
(73) Patentinhaber: Bayerische Motoren Werke Aktiengesellschaft, 80788 München (DE)
(72) Erfinder: Huemer, Gerhart, D-81825 München (DE); Franz, Dietmar, D-85386 Eching (DE); Lemberger, Heinz, D-85774 Unterföhring (DE)

(56) Entgegenhaltungen:
- DE-A- 3 201 443
- DE-A- 3 403 435
- DE-A- 4 324 178
- GB-A- 2 185 077
- US-A- 4 095 644
- PATENT ABSTRACTS OF JAPAN vol. 003, no. 076 (M-064), 29.Juni 1979 & JP-A-54 053734 (HITACHI LTD), 27.April 1979,
- DATABASE WPI Section PQ, Week 9544 Derwent Publications Ltd., London, GB; Class Q51, AN 95-342622 XP002007148 BEAMER H: "Cooling system for engine/transmission of motor vehicle - uses three way valve electrically controlled dependent on signals from temperature sensor monitoring temperature of transmission oil" & RESEARCH DISCLOSURE, Bd. 377, Nr. 011, 10.September 1995, EMSWORTH, GB,
- PATENT ABSTRACTS OF JAPAN vol. 006, no. 220 (M-169), 5.November 1982 & JP-A-57 124195 (TOKYO SHIBAURA DENKI KK), 2.August 1982,

## Beschreibung

Die Erfindung bezieht sich auf eine Vorrichtung zur Beeinflussung der Getriebeöltemperatur in Kraftfahrzeugen nach dem Oberbegriff des Patentanspruchs 1.

Eine derartige Vorrichtung geht beispielsweise aus der DE 34 03 435 A1 hervor. Die bekannte Vorrichtung befaßt sich mit einer Einrichtung zur Temperatursteuerung des Getriebeöls eines Getriebes für Kraftfahrzeuge. Bei einem manuellen oder automatischen Getriebe ist beispielsweise das Getriebeöl in einem dicht abgeschlossenen Gehäuse enthalten, das die Zahnradanordnung des Getriebes umgibt. Ein oder mehrere sich drehende Zahnräder tauchen teilweise in das Getriebeöl ein. Durch die Drehbewegung der eingetauchten Zahnräder wird das Getriebeöl auf die zu schmierende Zahnradanordnung geschleudert.

Um bei einem derartigen Getriebe das Getriebeöl möglichst schnell auf die gewünschte Betriebstemperatur zu erwärmen, ist bei der aus der DE 34 03 435 A1 bekannten Vorrichtung eine Heizeinrichtung vorgesehen, über die das Getriebeöl in einem ersten Betriebszustand zirkuliert, bis die Getriebeöltemperatur einen vorgegebenen Sollwert erreicht hat. Daraufhin wird in einem zweiten Betriebszustand die Zirkulation über die Heizeinrichtung beendet und die übliche Zirkulation über eine Kühleinrichtung begonnen. Der Wechsel zwischen dem ersten und zweiten Betriebszustand wird mittels eines temperaturabhängigen Schaltventils vorgenommen. Dies hat zur Folge, daß ein Kühlen bzw. ein Erwärmen des Getriebeöls erst dann vorgenommen wird, wenn der vorgegebene Sollwert der Getriebeöltemperatur bereits über- bzw. unterschritten ist. Bei einer derartigen Temperatursteuerung treten starke Schwankungen der Getriebeöltemperatur um den vorgegebenen Sollwert auf. Darüber hinaus ist die Heizeinrichtung nach dem Ausführungsbeispiel der bekannten Vorrichtung ein von heißem Abgas durchströmter Wärmetauscher, dessen Temperatur weder bekannt noch beeinflußbar ist. Somit ergibt sich bei der Erwärmung des Getriebeöls ein nicht vorhersehbarer willkürlicher Temperaturverlauf.

Aus der DE 43 24 178 A1 ist eine Kühlanlage für einen Verbrennungsmotor eines Kraftfahrzeuges mit einem Thermostatventil bekannt. Das Thermostatventil enthält ein Dehnstoffelement, mit dem die Temperatur des Kühlmittels in einem Warmlaufbetrieb, einem Mischbetrieb und einem Kühlerbetrieb regelbar ist. Je nach Betriebsart durchläuft die Kühlflüssigkeit den Kühler vollständig, nur teilweise oder gar nicht. Eine Heizvorrichtung zum Erhitzen des Kühlmittels ist nicht beschrieben.

Es ist Aufgabe der Erfindung, eine Vorrichtung zur Beeinflussung der Geriebeöltemperatur eingangs genannter Art derart zu verbessern, daß anstelle einer Steuerung eine Regelung der Getriebeöltemperatur, insbesondere in Abhängigkeit von Fahrzeugparametern, die sich auf die Getriebeöltemperatur auswirken, vorgenommen wird.

Diese Aufgabe wird durch die kennzeichnenden Merkmale des Patentanspruchs 1 gelöst.

Demgemäß wird zunächst der erste Betriebszustand, bei dem das Getriebeöl über die Heizeinrichtung geleitet wird, in einer definierten Warmlaufphase eingestellt. Diese Warmlaufphase kann sich beispielsweise sowohl auf die Brennkraftmaschine, insbesondere nach einem Kaltstart, als auch auf das Getriebe, insbesondere auf das Erreichen einer minimalen Getriebeöltemperatur, beziehen. Während der definierten Warmlaufphase können unterschiedliche Fahrzeugparameter berücksichtigt werden. Nach der Warmlaufphase wird erfindungsgemäß mittels eines dritten Betriebszustands in Form eines Mischbetriebes zwischen dem ersten und zweiten Betriebszustand die Getriebeöltemperatur auf einen vorgegebenen Sollwert geregelt. Hierfür wird ein kontinuierlich regelbares Ventil verwendet, insbesondere ein Thermostatventil mit elektrisch beheizbarem Dehnstoffelement, bei dem nicht nur wie beim bekannten Schaltventil ausschließlich der erste Betriebszustand in Form eines maximalen Heizens oder der zweite Betriebszustand in Form eines maximalen Kühlens, sondern auch ein dritter Betriebszustand in Form eines Mischbetriebes möglich ist. Im Zusammenhang mit dem Dehnstoffventil wird auf die obengenannten DE 43 24 178 Al hingewiesen. Durch diesen dritten Betriebszustand ist eine feinfühlige Regelung auf einen vorgegebenen Sollwert der Getriebeöltemperatur mit nur geringem Einschwingverhalten möglich.

Eine vorteilhafte Weiterbildung dieser Erfindung ist der Gegenstand des Patentanspruchs 2.

Hierbei wird die Regelung der Getriebeöltemperatur auf einen vorgegebenen Sollwert in Abhängigkeit von mindestens einem Fahrzeugparameter vorgenommen, durch den eine auf das Getriebeöl temperaturerhöhende Wirkung vorhergesehen werden kann.

Demnach wird eine Vorsteuerung der Getriebeöltemperatur derart vorgenommen, daß bei einem Ereignis, das sich nach einer bestimmten Totzeit auf das Getriebeöl temperaturerhöhend auswirkt, wie z. B. eine Rückschaltung unter Vollast, frühzeitig der dritte Betriebszustand in Richtung des zweiten Betriebszustandes, d. h. zum Kühlen des Getriebeöls, verschoben wird. Hierdurch wird zum einen die Totzeit und zum anderen ein starkes Überschwingen der Getriebeöltemperatur bezogen auf den vorgegebenen Sollwert verhindert.

Gemäß Patentanspruch 3 ist die Heizeinrichtung ein Wärmetauscher, der vom Kühlmittel der Brennkraftmaschine durchflossen wird. Dabei wird davon ausgegangen, daß die Vorrichtung zur Beeinflussung der Getriebeöltemperatur ein elektronisches Steuergerät aufweist, durch das die Beeinflussung der Getriebeöltemperatur vorgenommen wird. Ein derartiges elektronisches Steuergerät ist beispielsweise das ohnehin vorhandene Steuergerät zur Brennkraftmaschinensteuerung und/oder zur Automatikgetriebesteuerung. Insbesondere im elektronischen Steuergerät zur Brennkraftmaschinensteuerung steht üblicherweise die Temperatur des Kühlmittels der Brennkraftmaschine als Information zur Verfügung. Da gemäß einer vorteilhaften Ausführungsform die Heizeinrichtung zur Erwärmung des Getriebeöls ein Wärmetauscher ist, der vom Kühlmittel der Brennkraftmaschine durchflossen wird, und die Temperatur des Kühlmittels der Brennkraftmaschine üblicherweise als Information zur Verfügung steht, ist der Verlauf der Getriebeöltemperatur bei der Erwärmung des Getriebeöls vorhersehbar. Da zudem üblicherweise die Kühlmitteltemperatur der Brennkraftmaschine ebenfalls beeinflußbar ist, kann die Getrieböltemperatur nicht nur mittels der Betriebszustände des Ventils sondern auch durch die Kühlmitteltemperatur der Brennkraftmaschine geregelt werden.

Eine vorteilhafte Weiterbildung der Erfindung ist der Gegenstand des Patentanspruchs 4.

Demgemäß wird der Durchfluß des Kühlmittels durch den Wärmetauscher in Abhängigkeit von mindestens einem Fahrzeugparameter gesteuert. Beispielsweise wird der Durchfluß des Kühlmittels in Abhängigkeit vom Betriebszustand der Brennkraftmaschine, von der Kühlmitteltemperatur oder vom Ablauf einer vorgegebenen Zeitspanne gesteuert. Eine vorgegebene Zeitspanne kann beispielsweise als Dauer der Warmlaufphase der Brennkraftmaschine bis zum Erreichen einer vorgegebenen Kühlmitteltemperatur definiert werden. Es ist beispielsweise auch möglich, den Durchfluß des Kühlmittels durch den Wärmetauscher vollständig zu unterbinden, wenn die Kühlmitteltemperatur der Brennkraftmaschine kleiner als die Getriebeöltemperatur ist.
Durch die erfindungsgemäße Weiterbildung werden Störgrößen bei der Regelung der Getriebeöltemperatur vermindert.

Ergänzend wird darauf hingewiesen, daß die Erfindung selbstverständlich auch eine Kombination der unabhängigen Ansprüche 1 und 3 umfaßt.

In der Zeichnung ist ein Ausführungsbeispiel der Erfindung dargestellt. Es zeigt
- Fig. 1: eine erfindungsgemäße Vorrichtung, mit einem elektronischen Steuergerät, einem elektrisch regelbaren Thermostatventil und einer Heizeinrichtung, die vom Kühlmittel der Brennkraftmaschine durchflossen wird, und
- Fig. 2: einen Vergleich zwischen den Verläufen der Getriebeöltemperatur, die sich im ersten Fall aus der bekannten Temperatursteuerung und im zweiten Fall aus der erfindungsgemäßen Temperaturregelung ergeben.

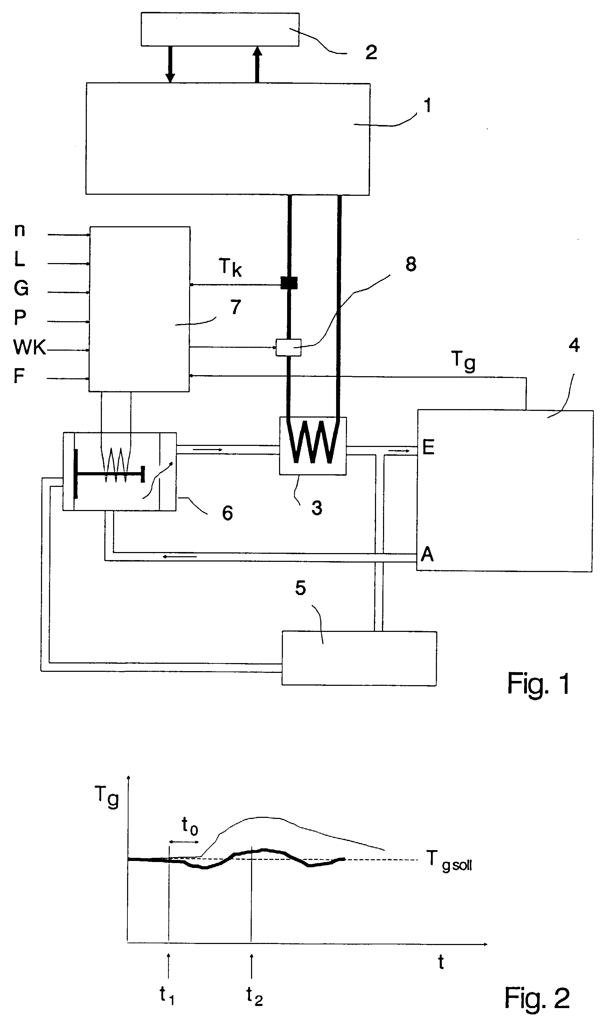

In Fig. 1 ist eine Brennkraftmaschine 1 über erste Ein- und Ausgänge mit einem Kühler 2 und über zweite Ein- und Ausgänge mit einer Heizeinrichtung 3 verbunden. Die Heizeinrichtung 3 ist ein Wärmetauscher, der vom Kühlmittel der Brennkraftmaschine 1 über die zweiten Ein- und Ausgänge durchflossen wird. Der Wärmetauscher 3 steht in wärmeleitendem Kontakt mit einer Getriebölleitung, die von einem elektrisch regelbaren Thermostatventil 6 zum Eingang E des Getriebes 4 und zum Eingang einer Kühleinrichtung 5 führt. Weiterhin ist der Ausgang A des Getriebes 4 über eine Getriebölleitung mit dem Eingang des elektrisch regelbaren Thermostatventils 6 verbunden. Eine weitere Getriebeölleitung ist zwischen dem Kühler 5 und dem elektrisch regelbaren Thermostatventil 6 angeordnet. Das elektrisch regelbare Thermostatventil 6 weist ein temperaturabhängiges Dehnstoffelement auf, das über eine elektrische Leitung, die mit einem elektronischen Steuergerät 7 verbunden ist, beheizbar ist. Zur Funktionsweise des elektrisch regelbaren Thermostatventils 6 sei beispielsweise auf die DE 43 24 178 A1 verwiesen, bei der ein derartiges Thermostatventil zur Regelung der Kühlmitteltemperatur einer Brennkraftmaschine eingesetzt wird.

In einer Leitung zwischen der Brennkraftmaschine 1 und der Heizeinrichtung 3 ist ein Absperrventil 8 vorgesehen, durch das der Durchfluß des Kühlmittels der Brennkraftmaschine 1 zur Heizeinrichtung 3 unterbrochen werden kann. Das Absperrventil 8 ist über eine Steuerleitung mit dem elektronischen Steuergerät 7 verbunden. Das elektronische Steuergerät 7 weist mehrere Eingänge auf, durch die beispielsweise folgende Signale als Information an das elektronische Steuergerät 7 weitergeleitet werden: die Getriebeöltemperatur T_{g}, die Kühlmitteltemperatur Tₖ, ein Drehzahlwert n, z. B. die Abtriebsdrehzahl, die Brennkraftmaschinendrehzahl oder die Differenz zwischen der Abtriebsdrehzahl und der Brennkraftmaschinendrehzahl, ein Lastsignal L der Brennkraftmaschine, der momentan eingelegte Gang G, das momentan aktivierte Schaltprogramm P für einen automatischen Gangwechsel im Getriebe 4, das Einschaltsignal der Wandlerüberbrückungskupplung WK und/oder der ermittelte Fahrertyp F im Falle eines adaptiven Automatikgetriebes. Dies ist lediglich eine mögliche Auswahl von Fahrzeugparametern, die zur Ansteuerung des elektrisch regelbaren Thermostatventils 6 und/oder zur Ansteuerung des Absperrventils 8 herangezogen werden können. Das elektronische Steuergerät 7 ist beispielsweise das ohnehin vorhandene elektronische Steuergerät zur Steuerung der Brennkraftmaschine 1 oder zur Steuerung des Getriebes 4 im Falle eines Automatikgetriebes.

In Fig. 1 ist der erste Betriebszustand des elektrisch regelbaren Thermostatventils 6 dargestellt. Das Getriebeöl wird vom Ausgang A des Getriebes 4 über das Thermostatventil 6 vollständig durch den Wärmetauscher 3 zum Eingang E des Getriebes 4 in einer Art "Kurzschluß" rückgeführt. Hierbei sind vorzugsweise die Getriebeölleitungen sehr kurz. In einer Warmlaufphase, die beispielsweise bei einem Kaltstart der Brennkraftmaschine 1 beginnt und bei Erreichen eines vorgegebenen Sollwertes für die Getriebeöltemperatur T_{g} endet, wird dieser erste Betriebszustand des elektrisch regelbaren Thermostatventils 6 zur schnellstmöglichen Erwärmung des Getriebeöls beibehalten. Sollte zu Beginn der Warmlaufphase beispielsweise die Kühlmitteltemperatur Tₖ kleiner als die Getriebeöltemperatur T_{g} sein, wird das Absperrventil 8 vom elektronischen Steuergerät 7 angesteuert, um den Durchfluß des Kühlmittels durch den Wärmetauscher 3 zumindest solange zu unterbinden, bis die Kühlmitteltemperatur Tₖ gleich der Getriebeöltemperatur T_{g} ist. Da sich die Kühlmitteltemperatur Tₖ viel schneller erwärmt als die Getriebeöltemperatur T_{g} wird die Warmlaufphase der Getriebeöltemperatur nur für geringe Zeit verzögert. Eine Warmlaufphase kann beispielsweise auch im Leerlaufbetrieb der Brennkraftmaschine 1 definiert werden, da während eines längeren Leerlaufbetriebs die Möglichkeit besteht, daß die Getriebeöltemperatur T_{g} unter den vorgegebenen Sollwert sinkt. Auch in diesem Fall ist der erste Betriebszustand des elektrisch regelbaren Thermostatventils 6 vorteilhaft.

Ist der vorgegebene Sollwert der Getriebeöltemperatur T_{g} erreicht, wird mittels des elektronischen Steuergeräts 7 das elektrisch regelbare Thermostatventil 6 in seinen dritten Betriebszustand in Form eines Mischbetriebes zwischen dem ersten und zweiten Betriebszustand übergeführt, um den vorgegebenen Sollwert zu halten bzw. auf den vorgegebenen Sollwert zu regeln, falls Störgrößen zu einer Abweichung der Getriebeöltemperatur T_{g} von diesem vorgegebenen Sollwert T_{gsoll} führen.

Zur Regelung des Thermostatventils 6 wird die elektrische Leitung um das Dehnstoffelement vom elektronischen Steuergerät 7 bestromt. Um den zweiten Betriebszustand des Thermostatventils 6 einzustellen, würde das elektronische Steuergerät 7 die elektrischen Leitungen solange bestromen, bis die dargestellte rechte Öffnung des Thermostatventils 6 geschlossen und die geschlossen dargestellte linke Öffnung des Thermostatventils 6 vollständig geöffnet ist. Der dritte Betriebszustand in Form eines Mischbetriebes bedeutet eine elektrische Bestromung derart, daß das Getriebeöl sowohl durch die rechte als auch durch die linke Öffnung des Thermostatventils fließen kann. Hierdurch ist eine feinfühlige Regelung der Getriebeöltemperatur T_{g} auf den vorgegebenen Sollwert T_{gsoll} möglich.

Eine weitere Verbesserung der Regelung ergibt sich durch die Berücksichtigung der Fahrzeugparameter n, L, G, P, WK und/oder F durch das elektronische Steuergerät 7. Durch die Beobachtung dieser Fahrzeugparameter kann eine temperaturerhöhende Wirkung vorhergesehen werden, die sich üblicherweise erst nach einer Totzeit t₀ (vgl. Fig. 2) tatsächlich auf die Getriebeöltemperatur T_{g} auswirkt. Zur Regelung der Getriebeöltemperatur T_{g} auf den vorgegebenen Sollwert T_{gsoll} wird demnach nicht erst eine Abweichung vom Sollwert abgewartet, sondern z. B. bei einer zu erwartenden Temperaturerhöhung eine Kühlung des Getriebeöls bereits vorgesteuert. Eine temperaturerhöhende Wirkung kann beispielsweise dann vorhergesehen werden, wenn sich der Drehzahlwert n, z. B. als Abtriebsdrehzahl, schlagartig erhöht, wenn das Lastsignal L Vollast anzeigt, wenn der momentan eingelegte Gang G auf eine Rückschaltung schließen läßt, wenn das Programm P von "wirtschaftlich" auf "sportlich" wechselt und/oder wenn der Fahrstil des Fahrers sich in Richtung "sportlich" verändert sowie wenn das Signal Wandlerüberbrückungskupplung WK eine Öffnung der Wandlerüberbrückungskupplung anzeigt. Darüber hinaus können zu jedem dieser Fahrzeugparameter charakteristische Totzeiten t₀ empirisch ermittelt und abgespeichert werden, die zur Regelung der Getriebeöltemperatur T_{g} berücksichtigt werden können.

In Fig. 2 sind die Verläufe der Getriebeöltemperatur T_{g} nach dem Stand der Technik und nach der Erfindung im Vergleich über der Zeit t dargestellt. Zum Zeitpunkt t₁ soll sich ein Fahrzeugparameter derart ändern, daß sich eine temperaturerhöhende Wirkung nach einer Totzeit t₀ ergeben würde. Zum Zeitpunkt t₂ wird die Änderung dieses Fahrzeugparameters wieder rückgängig gemacht. Beispielsweise wird zum Zeitpunkt t₁ durch das Lastsignal L der Vollastbetrieb der Brennkraftmaschine 1 an das elektronische Steuergerät 7 mitgeteilt. Bei einer Temperatursteuerung nach dem Stand der Technik würde sich nach einer Totzeit t₀ zunächst die Getriebeöltemperatur T_{g} erhöhen, daraufhin erst würde der zweite Betriebszustand eingestellt werden, worauf die Getriebeöltemperatur T_{g} nicht sofort reagieren würde, so daß ein erheblicher überschwinger der Getriebeöltemperatur T_{g} bezogen auf den vorgegebenen Sollwert T_{gsoll} auftreten würde (dünne Linie). Gemäß der Erfindung würde zum Zeitpunkt t₁ die temperaturerhöhende Wirkung bereits vorhergesehen werden, wodurch das elektronische Steuergerät 7 sofort eine Bestromung der elektrischen Leitung in Richtung zweiten Betriebszustand vornehmen würde. Während der Totzeit t₀ wird somit zumindest teilweise bereits eine Kühlung eingeleitet, so daß sich zur Regelung auf den vorgegebenen Sollwert T_{gsoll} lediglich ein Einschwingvorgang mit sehr geringer Amplitude ergibt (breite Linie).

Dieses erfindungsgemäße Ausführungsbeispiel verdeutlicht die Möglichkeit zur Optimierung einer Temperaturregelung des Getriebeöls in Kraftfahrzeugen.

## Patentansprüche

1. Vorrichtung zur Beeinflussung der Getriebeöltemperatur in Kraftfahrzeugen mit einer Kühleinrichtung zur Kühlung des Getriebeöls, mit einer Heizeinrichtung zur Erwärmung des Getriebeöls und mit einem Ventil, das das Getriebeöl in einem ersten Betriebszustand über die Heizeinrichtung und in einem zweiten Betriebszustand über die Kühleinrichtung leitet, wobei der erste Betriebszustand in einer Warmlaufphase eingestellt wird
dadurch gekennzeichnet, daß das Ventil als kontinuierlich regelbares Ventil (6) ausgebildet ist, mittels dem nach der Warmlaufphase ein dritter Betriebszustand in Form eines Mischbetriebes einstellbar ist, bei dem das Getriebeöl gleichzeitig und derart teilweise über die Heizeinrichtung und teilweise über die Kühleinrichtung geleitet wird, daß die Getriebeöltemperatur (T_{g}) auf einen vorgegebenen Sollwert (T_{g soll}) eingeregelt wird.

2. Vorrichtung nach Anspruch 1,
dadurch gekennzeichnet, daß die Regelung der Getriebeöltemperatur (T_{g}) auf einen vorgegebenen Sollwert (T_{g soll}) in Abhängigkeit von mindestens einem Fahrzeugparameter (n, L, G, P, WK, F) vorgenommen wird, durch den eine auf das Getriebeöl temperaturerhöhende Wirkung vorhergesehen werden kann.

3. Vorrichtung nach Anspruch 1 oder 2,
dadurch gekennzeichnet, daß die Heizeinrichtung ein Wärmetauscher (3) ist, der vom Kühlmittel der Brennkraftmaschine (1) durchflossen wird.

4. Vorrichtung nach Anspruch 3,
dadurch gekennzeichnet. daß der Durchfluß des Kühlmittels durch den Wärmetauscher (3) in Abhängigkeit von mindestens einem Fahrzeugparameter (Tₖ) gesteuert wird.

## Claims

1. A device for influencing the transmission oil temperature in motor vehicles with a cooling arrangement to cool the transmission oil, with a heating arrangement to heat the transmission oil and with a valve, which in a first operating condition directs the transmission oil via the heating arrangement and in a second operating condition via the cooling arrangement, whereby the first operating condition is set up during a warm up phase
characterised in that the valve is configured as a continuously regulated valve (6), by means of which, following the warm up phase, a third operating condition in the form of a mixed operation can be set up, in which the transmission oil is directed simultaneously partly via the heating arrangement and partly via the cooling arrangement, so that the transmission oil temperature (T_{g}) is regulated to a prescribed target value (T_{gsoll}).

2. A device according to Claim 1,
characterised in that the regulation of the transmission oil temperature (T_{g}) to a prescribed target value (T_{gsoll}) is undertaken in dependence upon at least one vehicle parameter (n, L, G, P, WK, F), from which a transmission oil temperature increasing effect can be foreseen.

3. A device according to Claim 1 or Claim 2,
characterised in that the heating arrangement is a heat exchanger (3), through which the cooling medium of the internal combustion engine (1) flows.

4. A device according to Claim 3,
characterised in that the through flow of the cooling medium through the heat exchanger (3) is controlled in dependence upon at least one vehicle parameter (Tₖ).

## Revendications

1. Dispositif pour influencer la température de l'huile de la boîte de vitesses d'un véhicule automobile comprenant une installation de refroidissement pour refroidir l'huile de la boîte de vitesses, une installation de chauffage pour chauffer cette huile et une soupape qui conduit l'huile de la boîte de vitesses pour un premier état de fonctionnement à travers l'installation de chauffage et pour un second état de fonctionnement à travers l'installation de refroidissement, le premier état de fonctionnement s'établissant en phase de chauffage,
caractérisé en ce que
la soupape est une soupape à réglage continu (6) à l'aide de laquelle, après la phase de chauffage, on règle un troisième état de fonctionnement sous la forme d'un état mixte selon lequel l'huile de la boîte de vitesses est conduite simultanément en partie à travers l'installation de chauffage et en partie à travers l'installation de refroidissement pour régler la température (T_{g}) de l'huile de la boîte de vitesses sur une valeur de consigne prédéterminée (T_{gcons}).

2. Dispositif selon la revendication 1,
caractérisé en ce que
la régulation de la température (T_{g}) de l'huile de la boîte de vitesses sur une valeur de consigne prédéterminée (T_{gcons}) se fait en fonction d'au moins un paramètre (n, L, G, P, WK, F) du véhicule qui permet de prévoir un effet augmentant la température de l'huile de la boîte de vitesses.

3. Dispositif selon la revendication 1 ou 2,
caractérisé en ce que
l'installation de chauffage est un échangeur de chaleur (3) traversé par le fluide de refroidissement du moteur à combustion interne.

4. Dispositif selon la revendication 3,
caractérisé en ce que
le passage du fluide de refroidissement à travers l'échangeur de chaleur (3) est commandé en fonction d'au moins un paramètre (Tₖ) du véhicule.
